# EUROPEAN PATENT APPLICATION

(11) **EP 4 797 335 A1**
(43) Date of publication of application: **26.08.2026**
(21) Application number: 26158222.5
(22) Date of filing: 12.02.2026
(51) Int. Cl.: H01M 4/04, H01M 4/139, H01M 4/66, H01M 4/70, H01M 10/058

(54) **POROUS CURRENT COLLECTOR ASSEMBLIES FOR USE IN ENERGY STORAGE DEVICES, AND METHODS THEREOF**

(30) Priority: 20.02.2025 US 202563761040 P
(71) Applicant: Tesla, Inc., Austin, TX 78725 (US)
(72) Inventor: HE, Steve Sidi, Austin, 78725 (US); HUA, Yuyan, Austin, 78725 (US)
(74) Representative: Zacco Sweden AB

(57) **Abstract**

A porous current collector assembly including a porous electrically insulating substrate and porous foil layers is described. The porous current collector assembly may enable simultaneous ion and electron conduction while maintaining selective electrical isolation of electrodes. Configurations and methods thereof, of porous current collector assemblies within electrodes, electrode assemblies, and electrode assembly stacks, and energy storage devices are also described.

## Description

### PRIORITY APPLICATIONS

This application claims the benefit of priority to U.S. Patent Application No. 63/761,040, entitled "POROUS CURRENT COLLECTOR ASSEMBLIES FOR USE IN ENERGY STORAGE DEVICES," filed on February 20, 2025.

### BACKGROUND

In some energy storage device manufacturing processes, an electrode film may be disposed over a current collector to form an electrode. Conventional energy storage devices typically require that the electrodes be separated by an electrically insulating substrate separator to prevent shorting. However, this adds weight, cost and manufacturing challenges. As such, improved electrodes, electrode assemblies and energy storage devices are desired.

### SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In one aspect, a porous current collector assembly for an energy storage device is described. The porous current collector assembly includes: a porous electrically insulating substrate including a first side and a second side, a first porous foil layer disposed over the first side of the porous electrically insulating substrate, and a second porous foil layer disposed over the second side of the porous electrically insulating substrate.

In some embodiments, the first porous foil layer includes a different metal from the second porous foil layer. In some embodiments, the first porous foil layer and the second porous foil layer each independently include a metal selected from the group consisting of Cu, Al, Ni, Li, Mn, Co, Fe, Cr and combinations thereof. In some embodiments, the first porous foil layer and the second porous foil layer each independently include stainless steel.

In some embodiments, the first porous foil layer and the second porous foil layer each independently include a foil layer porosity of about 5-75%. In some embodiments, the first porous foil layer and the second porous foil layer each independently include a foil pore size of about 1 nm to about 1 cm. In some embodiments, the first porous foil layer and the second porous foil layer each independently include a foil layer thickness of about 0.1 µm to about 10 µm.

In some embodiments, the porous electrically insulating substrate includes a polymer selected from the group consisting of polyethylene, polypropylene, polystyrene, polyvinyl chloride, polytetrafluoroethylene, polyurethanes, polyamide, polyimide, polyester, poly(vinylidene fluoride) aramid, polyethers, co-polymers thereof, and combinations thereof.

In some embodiments, the porous electrically insulating substrate includes a substrate porosity of about 5% to about 75%. In some embodiments, the porous electrically insulating substrate includes a substrate pore size of about 1 nm to about 1 cm. In some embodiments, the porous electrically insulating substrate includes a substrate thickness of about 1 µm to about 30 µm. In some embodiments, the porous electrically insulating substrate includes a substrate melting temperature of about 50°C to about 450°C.

In another aspect, an electrode is described. The electrode includes: an electrode film, and a porous current collector assembly, wherein the electrode film is disposed over the porous current collector assembly.

In some embodiments, the electrode film is substantially absent of solvent residue.

In another aspect, an electrode assembly is described. The electrode assembly includes: an electrode; and a second electrode film, wherein the porous current collector assembly is positioned between the electrode film and the second electrode film.

In another aspect, an electrode assembly stack is described. The electrode assembly stack includes: an electrode assembly, a second electrode assembly, and a separator positioned between the electrode assembly and the second electrode assembly.

In some embodiments, the electrode film and the second electrode film are of the same polarity.

In another aspect, a double electrode assembly stack is described. The double electrode assembly stack includes: an electrode assembly, and a second electrode assembly, wherein one of the electrode films of the second electrode assembly is in contact with one of the electrode film or the second electrode film of the electrode assembly.

In some embodiments, the electrode film and the second electrode film are of opposite polarities.

In another aspect, an energy storage device is described. The energy storage device includes: an electrode assembly, an electrolyte, and a housing, wherein the electrode assembly and the electrolyte are disposed within the housing.

In another aspect, a method of forming a porous current collector assembly is described. The method includes: disposing a first porous foil layer over a first side of a porous electrically insulating substrate and disposing a second porous foil layer over a second side of the porous electrically insulating substrate to form a porous current collector assembly.

In some embodiments, disposing the first porous foil layer comprises disposing the first porous foil layer over the first side opposite the second side of the porous electrically insulating substrate.

In another aspect, a method of forming an electrode is described. The method includes: forming a porous current collector assembly, calendering a dry electrode film mixture in a dry process to form an electrode film, and disposing the electrode film over the porous current collector assembly to form an electrode.

### BRIEF DESCRIPTION OF THE DRAWINGS

FIG. 1 is a schematic illustration showing a porous current collector assembly, according to some embodiments.
FIG. 2 is a schematic illustration showing an electrode assembly including a porous current collector assembly, according to some embodiments.
FIG. 3 is a schematic illustration showing a double electrode assembly stack, according to some embodiments.
FIG. 4 is a schematic illustration showing an electrode assembly stack including a separator, according to some embodiments.
FIG. 5 is a flowchart showing a method of forming a porous current collector assembly, according to some embodiments.

It will be clearly understood though, that the examples and figures are for illustrative purposes only, and are not necessarily restrictive of the scope of the present invention.

### DETAILED DESCRIPTION

Although certain preferred embodiments and examples are disclosed below, the inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations, in turn, in a manner that may be helpful in understanding certain embodiments; however, the order of description should not be construed to imply that these operations are order-dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

Porous current collector assemblies and their uses in electrodes, electrode assemblies, and energy storage devices are described. The porous current collector assemblies (or porous composite current collector assemblies) include a porous electrically insulating substrate and porous foil layers that are each disposed on opposite sides of the porous electrically insulating substrate. Different configurations of porous current collector assemblies within electrodes, electrode assemblies, electrode assembly stacks, and energy storage devices may provide for various improvements.

Conventional current collectors are typically nonporous, preventing ion conduction and limiting performance. As such, some configurations of porous current collector assemblies within electrodes, electrode assemblies, electrode assembly stacks, and energy storage devices disclosed herein demonstrate improved design safety (e.g., enhanced safety against foil layer melting at local hot spots), increased efficiency between electrodes (e.g., enhancing ion transport, widening loading tolerances), improved electrolyte motion (e.g., enhanced electrolyte wetting, filling, and retention over lifetime), increased porosity for gas exfiltration (e.g., mitigation of reliability risks such as trapped gas causing delamination of electrode film layers or Li plating), and improved mechanical properties (e.g., porous electrically insulating substrate have increased elongation at break, enhanced crack propagation resistance, and mitigation risk of web breaks during manufacturing processes). Other configurations of porous current collector assemblies within electrodes, electrode assemblies, electrode assembly stacks, and energy storage devices disclosed herein demonstrate increased fast charging capabilities (e.g., significantly reducing ion diffusion pathlength by about 50%) enabling thicker electrodes. Further configurations (e.g., in which the two sides of the porous current collector are at different polarities) enable removal of a traditional separator in an electrode assembly stack thereby increasing energy capacity (e.g., about 5-10%) and reducing costs and complexity.

### Porous Current Collector Assemblies

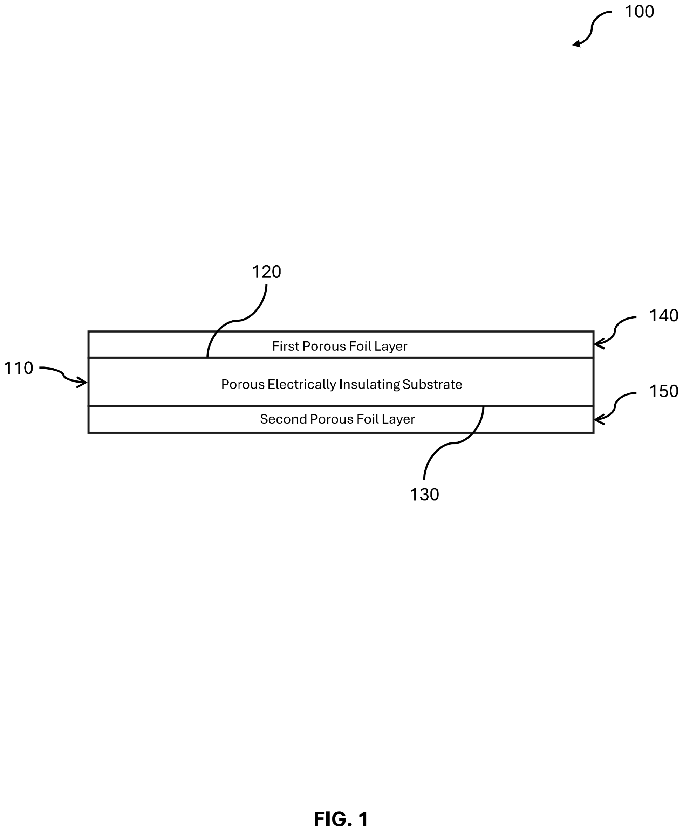

A porous current collector assembly that includes a porous electrically insulating substrate and porous foil layers may be produced or formed in various configurations. For example, FIG. 1 is a schematic illustration of a porous current collector assembly 100. As shown in FIG. 1, the porous current collector assembly 100 includes a porous electrically insulating substrate 110 having a first side 120 and a second side 130, a first porous foil layer 140 and a second porous foil layer 150. The first porous foil layer 140 and the second porous foil layer 150 are positioned along a length of the porous electrically insulating substrate 110 such that the first porous foil layer 140 is disposed over the first side 120, and the second porous foil layer 150 is disposed over the second side 130.

In some embodiments, the first porous foil layer is disposed over the first side opposite the second side of the porous electrically insulating substrate. In some embodiments, the first porous foil layer is disposed over the second side opposite the first side of the porous electrically insulating substrate. In some embodiments, the second porous foil layer is disposed over the first side opposite the second side of the porous electrically insulating substrate. In some embodiments, the second porous foil layer is disposed over the second side opposite the first side of the porous electrically insulating substrate.

In some embodiments, the porous electrically insulating substrate comprises a polymer selected from the group consisting of polyethylene, polypropylene, polystyrene, polyvinyl chloride, polytetrafluoroethylene, polyurethane, polyamide, polyimide, polyester, poly(vinylidene fluoride) aramid, polyether, co-polymers thereof, and combinations thereof.

In some embodiments, the porous electrically insulating substrate comprises a substrate porosity of, of about, of at least, or of at least about, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89% and 90%, or any range of values therebetween. In some embodiments, the porous electrically insulating substrate comprises a substrate porosity of about 5-75%.

In some embodiments, the porous electrically insulating substrate comprises a substrate thickness of, of about, of at least, of at least about, of at most, or of at most about, 0.5 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm and 40 µm, or any range of values therebetween. In some embodiments, the porous electrically insulating substrate comprises a substrate thickness of about 1-30 µm.

In some embodiments, the porous electrically insulating substrate comprises a substrate pore size of, of about, of at least, of at least about, of at most, or of at most about, 0.5 nm, 1 nm, 5 nm, 10 nm, 50 nm, 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, 1 µm, 5 µm, 10 µm, 50 µm, 100 µm, 150 µm, 200 µm, 250 µm, 300 µm, 350 µm, 400 µm, 450 µm, 500 µm, 550 µm, 600 µm, 650 µm, 700 µm, 750 µm, 800 µm, 850 µm, 900 µm, 950 µm, 1 mm, 2 mm, 3 mm, 4 mm, 5 mm, 6 mm, 7 mm, 8 mm, 9 mm and 1 cm, or any range of values therebetween. In some embodiments, the porous electrically insulating substrate comprises a substrate pore size of about 1 nm to 1 cm.

In some embodiments, the porous electrically insulating substrate comprises a substrate melting temperature of, of about, of at least, of at least about, of at most, or of at most about, 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, 140°C, 145°C, 150°C, 155°C, 160°C, 165°C, 170°C, 175°C, 180°C, 185°C, 190°C, 195°C, 200°C, 205°C, 210°C, 215°C, 220°C, 225°C, 230°C, 235°C, 240°C, 245°C, 250°C, 255°C, 260°C, 265°C, 270°C, 275°C, 280°C, 285°C, 290°C, 295°C, 300°C, 305°C, 310°C, 315°C, 320°C, 325°C, 330°C, 335°C, 340°C, 345°C, 350°C, 355°C, 360°C, 365°C, 370°C, 375°C, 380°C, 385°C, 390°C, 395°C, 400°C, 405°C, 410°C, 415°C, 420°C, 425°C, and 430°C, 435°C, 440°C, 445°C and 450°C, or any range of values therebetween.

In some embodiments, the first porous foil layer comprises a different material from the second porous foil layer. In some embodiments, the first porous foil layer and the second porous foil layer comprise the same material. In some embodiments, the material of the first porous foil layer and/or the second porous foil layer includes a metal. In some embodiments, the porous foil layer comprises a metal selected from the group consisting of copper (Cu), aluminum (Al), nickel (Ni), lithium (Li), manganese (Mn), cobalt (Co), iron (Fe), chromium (Cr) and combinations thereof. In some embodiments, the first porous foil layer and the second porous foil layer each independently comprise a metal selected from the group consisting of Cu, Al, Ni, Li, Mn, Co, Fe, Cr, and combinations thereof. In some embodiments, the porous foil layer comprises stainless steel. In some embodiments, the stainless steel may include an element of iron, chromium, molybdenum, carbon, nickel, nitrogen, manganese, silicon, titanium, vanadium, copper, and combinations thereof. In some embodiments, the porous foil layer includes a cathode active material.

In some embodiments, the porous foil layer comprises a foil layer porosity of, of about, of at least, or of at least about, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89% and 90%, or any range of values therebetween. In some embodiments, the porous foil layer comprises a foil layer porosity of about 5-75%.

In some embodiments, the porous foil layer comprises a foil layer thickness of, of about, of at least, of at least about, of at most, or of at most about, 0.1 µm, 0.2 µm, 0.3 µm, 0.4 µm, 0.5 µm, 0.6 µm, 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2 µm, 2.1 µm, 2.2 µm, 2.3 µm, 2.4 µm, 2.5 µm, 2.6 µm, 2.7 µm, 2.8 µm, 2.9 µm, 3 µm, 3.1 µm, 3.2 µm, 3.3 µm, 3.4 µm, 3.5 µm, 3.6 µm, 3.7 µm, 3.8 µm, 3.9 µm, 4 µm, 4.1 µm, 4.2 µm, 4.3 µm, 4.4 µm, 4.5 µm, 4.6 µm, 4.7 µm, 4.8 µm, 4.9 µm, 5 µm, 5.1 µm, 5.2 µm, 5.3 µm, 5.4 µm, 5.5 µm, 5.6 µm, 5.7 µm, 5.8 µm, 5.9 µm, 6 µm, 6.1 µm, 6.2 µm, 6.3 µm, 6.4 µm, 6.5 µm, 6.6 µm, 6.7 µm, 6.8 µm, 6.9 µm, 7 µm, 7.1 µm, 7.2 µm, 7.3 µm, 7.4 µm, 7.5 µm, 7.6 µm, 7.7 µm, 7.8 µm, 7.9 µm, 8 µm, 8.1 µm, 8.2 µm, 8.3 µm, 8.4 µm, 8.5 µm, 8.6 µm, 8.7 µm, 8.8 µm, 8.9 µm, 9 µm, 9.1 µm, 9.2 µm, 9.3 µm, 9.4 µm, 9.5 µm, 9.6 µm, 9.7 µm, 9.8 µm, 9.9 µm, 10 µm, or any range of values therebetween. In some embodiments, the porous foil layer comprises a foil layer thickness of about 0.1-10 µm.

In some embodiments, the porous foil layer comprises a foil pore size of, of about, of at least, of at least about, of at most, or of at most about, 0.5 nm, 1 nm, 5 nm, 10 nm, 50 nm, 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, 1 µm, 5 µm, 10 µm, 50 µm, 100 µm, 150 µm, 200 µm, 250 µm, 300 µm, 350 µm, 400 µm, 450 µm, 500 µm, 550 µm, 600 µm, 650 µm, 700 µm, 750 µm, 800 µm, 850 µm, 900 µm, 950 µm, 1 mm, 2 mm, 3 mm, 4 mm, 5 mm, 6 mm, 7 mm, 8 mm, 9 mm and 1 cm, or any range of values therebetween. In some embodiments, the porous foil layer comprises a foil pore size of about 1 nm to 1 cm.

In some embodiments, the porous foil layer is deposited by a chemical deposition process. In some embodiments, the chemical deposition process is selected from the group consisting of chemical vapor deposition, chemical bath deposition, electroplating, and combinations thereof. In some embodiments, the porous foil layer is deposited by a physical deposition process. In some embodiments, the physical deposition process is selected from the group consisting of physical vapor deposition, electron beam physical vapor deposition, arc deposition, pulsed laser deposition, sputtering, evaporative deposition, and combinations thereof.

### Electrode Assemblies with Porous Current Collector Assemblies

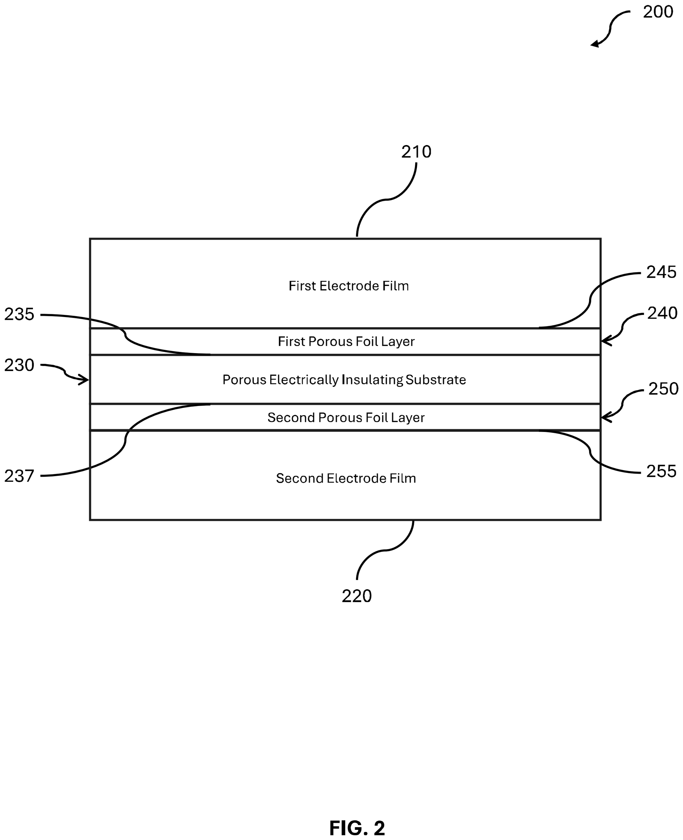

An electrode may include an electrode film disposed over a porous current collector assembly. An electrode assembly that includes electrode films (e.g., a cathode electrode film, anode electrode film) and a porous current collector assembly positioned between the electrode films may be produced or formed in various configurations. For example, FIG. 2 is a schematic illustration of an electrode assembly 200. As shown in FIG. 2, the electrode assembly 200 includes a first electrode film 210, a second electrode film 220, a porous electrically insulating substrate 230 having a first side 235 and a second side 237, a first porous foil layer 240 having a first facing side 245 and a second porous foil layer 250 having a second facing side 255. The first porous foil layer 240 and the second porous foil layer 250 are positioned along a length of the porous electrically insulating substrate 230 such that the first porous foil layer 240 is disposed over the first side 235 and the second porous foil layer 250 is disposed over the second side 237. The first electrode film 210 is positioned along a length of the first porous foil layer 240 such that the first electrode film 210 is disposed over the first facing side 245. The second electrode film 220 is positioned along a length of the second porous foil layer 250 such that the second electrode film 220 is disposed over the second facing side 255.

In some embodiments, the first and second electrode films are cathode electrode films. In some embodiments, the first and second electrode films are anode electrode films. In some embodiments, the first electrode film is a cathode electrode film, and the second electrode film is an anode electrode film. In some embodiments, the first electrode film is anode electrode film, and the second electrode film is a cathode electrode film. In some embodiments, an energy storage device includes an electrode assembly.

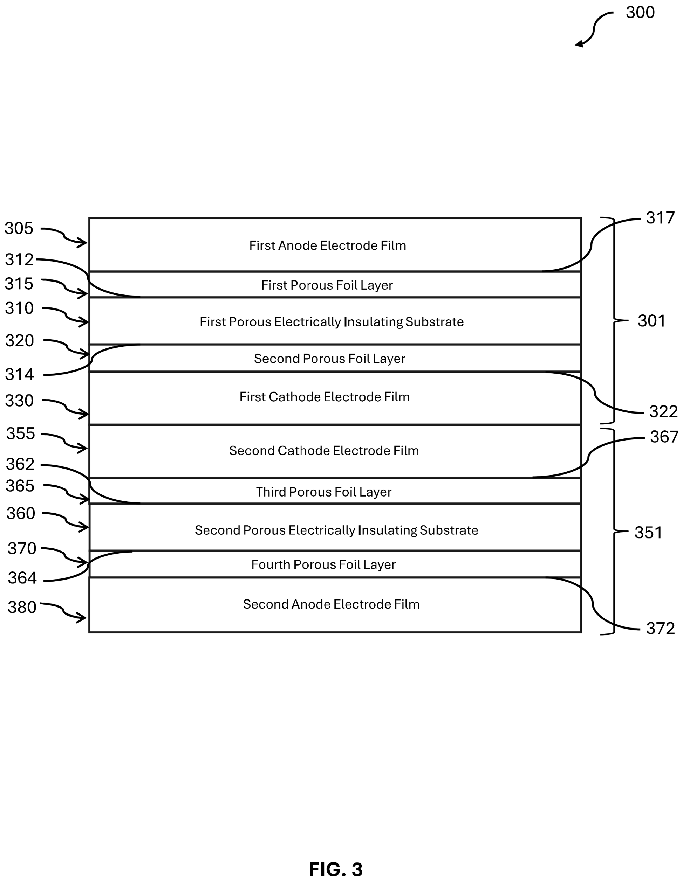

In some embodiments, a plurality of electrode assemblies may be disposed over one another to form an electrode assembly stack. In some embodiments, as the porous current collector assembly is both porous and electrically conductive, the porous current collector assembly allows for various electrode assembly stack configurations, which may or may not include a typical separator disposed between the anode and cathode. A double electrode assembly stack that includes an electrode assembly disposed over a second electrode assembly may be produced or formed in various configurations. For example, FIG. 3 is a schematic illustration of a double electrode assembly stack 300. As shown in FIG. 3, the double electrode assembly stack 300 includes an electrode assembly 301 and a second electrode assembly 351.

The electrode assembly 301 includes a first anode electrode film 305, a first porous electrically insulating substrate 310 having a first side 312 and a second side 314, a first porous foil layer 315 having a first anode facing side 317 and a second porous foil layer 320 having a first cathode facing side 322. The first porous foil layer 315 and the second porous foil layer 320 are positioned along a length of the first porous electrically insulating substrate 310 such that the first porous foil layer 315 is disposed over the first side 312 and the second porous foil layer 320 is disposed over the second side 314. The first anode electrode film 305 is positioned along a length of the first porous foil layer 315 such that the first anode electrode film 305 is disposed over the first anode facing side 317. The first cathode electrode film 330 is positioned along a length of the second porous foil layer 320 such that the first cathode electrode film 330 is disposed over the first cathode facing side 322.

The second electrode assembly 351 includes a second cathode electrode film 355, a second porous electrically insulating substrate 360 having a third side 362 and a fourth side 364, a third porous foil layer 365 having a second cathode facing side 367, a fourth porous foil layer 370 having a second anode facing side 372, and a second anode electrode film 380. The third porous foil layer 365 and the fourth porous foil layer 370 are positioned along a length of the second porous electrically insulating substrate 360 such that the third porous foil layer 365 is disposed over the third side 362 and the fourth porous foil layer 370 is disposed over the fourth side 364. The second cathode electrode film 355 is positioned along a length of the third porous foil layer 365 such that the second cathode electrode film 355 is disposed over the second cathode facing side 367. The second anode electrode film 380 is positioned along a length of the fourth porous foil layer 370 such that the second anode electrode film 380 is disposed over the second anode facing side 372. The second cathode electrode film 355 of the second electrode assembly 351 is in contact with the first cathode electrode film 330 of the electrode assembly 301.

In some embodiments, the first and second anode electrode films are positioned where the first and second cathode electrode films are positioned such that the first and second cathode electrode films are positioned where the first and second anode electrode films are positioned in the double electrode assembly stack.

In some embodiments, any of the electrode films may be a multi-layered electrode film (e.g., two or more electrode films disposed over one another). In some embodiments, the electrode films of the electrode assembly are of the same polarities. In some embodiments, the electrode films of the second electrode assembly are of the same polarities. In some embodiments, the electrode films of the second electrode assembly are of opposite polarities.

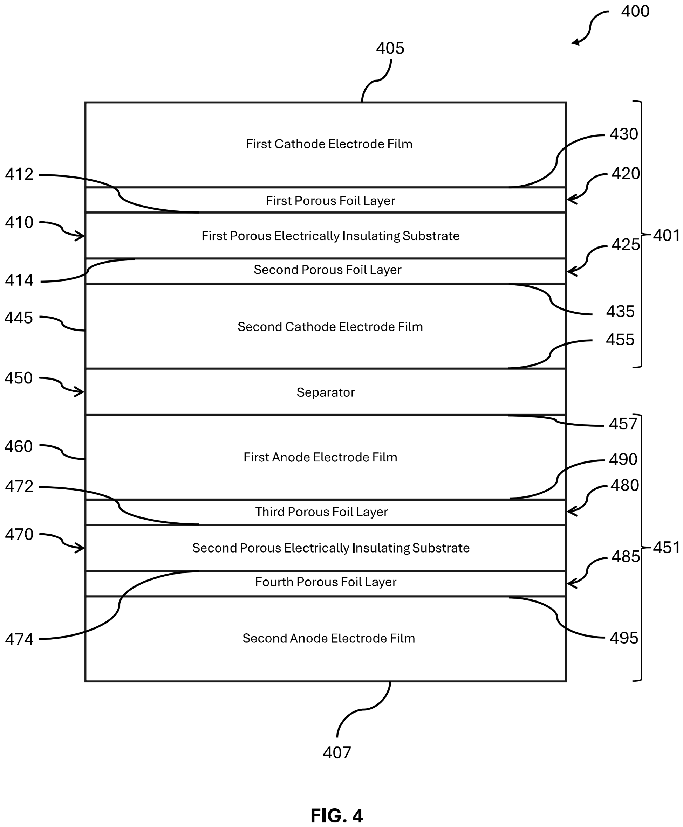

An electrode assembly stack that includes a separator positioned between an electrode assembly and a second electrode assembly may be produced or formed in various configurations. For example, FIG. 4 is a schematic illustration of an electrode assembly stack with a separator 400. As shown in FIG. 4, the electrode assembly stack with a separator 400 includes an electrode assembly 401 and a second electrode assembly 451. A separator 450 having a first separator side 455 and a second separator side 457 is positioned between the electrode assembly 401 and the second electrode assembly 451 such that the electrode assembly 401 is disposed along a length of the first separator side 455 and the second electrode assembly 451 is disposed along a length of the second separator side 457.

The electrode assembly 401 includes a first cathode electrode film 405, a first porous electrically insulating substrate 410 having a first side 412 and a second side 414, a first porous foil layer 420 having a first cathode facing side 430 and a second porous foil layer 425 having a second cathode facing side 435. The first porous foil layer 420 and the second porous foil layer 425 are positioned along a length of the first porous electrically insulating substrate 410 such that the first porous foil layer 420 is disposed over the first side 412 and the second porous foil layer 425 is disposed over the second side 414. The first cathode electrode film 405 is positioned along a length of the first porous foil layer 420 such that the first cathode electrode film 405 is disposed over the first cathode facing side 430. The second cathode electrode film 445 is positioned along a length of the second porous foil layer 425 such that the second cathode electrode film 445 is disposed over the second cathode facing side 435.

The second electrode assembly 451 includes a first anode electrode film 460, a second porous electrically insulating substrate 470 having a third side 472 and a fourth side 474, a third porous foil layer 480 having a first anode facing side 490, a fourth porous foil layer 485 having a second anode facing side 495, and a second anode electrode film 407. The third porous foil layer 480 and the fourth porous foil layer 485 are positioned along a length of the second porous electrically insulating substrate 470 such that the third porous foil layer 480 is disposed over the third side 472 and the fourth porous foil layer 485 is disposed over the fourth side 474. The first anode electrode film 460 is positioned along a length of the third porous foil layer 480 such that the first anode electrode film 460 is disposed over the first anode facing side 490. The second anode electrode film 407 is positioned along a length of the fourth porous foil layer 485 such that the second anode electrode film 407 is disposed over the second anode facing side 495.

In some embodiments, the first porous foil layer comprises a different material from the second porous foil layer. In some embodiments, the first porous foil layer and the second porous foil layer comprise the same material. In some embodiments, the third porous foil layer comprises a different material from the fourth porous foil layer. In some embodiments, the third porous foil layer and the fourth porous foil layer comprise the same material.

In some embodiments, the first porous foil layer is positioned between the first cathode electrode film and the first porous electrically insulating substrate. In some embodiments, the second porous foil layer is positioned between the second cathode electrode film and the first porous electrically insulating substrate. In some embodiments, the first porous foil layer is positioned between the second cathode electrode film and the first porous electrically insulating substrate. In some embodiments, the second porous foil layer is positioned between the first cathode electrode film and the first porous electrically insulating substrate.

In some embodiments, the third porous foil layer is positioned between the first anode electrode film and the second porous electrically insulating substrate. In some embodiments, the third porous foil layer is positioned between the second anode electrode film and the second porous electrically insulating substrate. In some embodiments, the fourth porous foil layer is positioned between the first anode electrode film and the second porous electrically insulating substrate. In some embodiments, the fourth porous foil layer is positioned between the second anode electrode film and the second porous electrically insulating substrate.

In some embodiments, the electrode films of the electrode assembly are of opposite polarities. In some embodiments, the electrode films of the electrode assembly are of the same polarities. In some embodiments, the electrode films of the second electrode assembly are of the same polarities. In some embodiments, the electrode films of the second electrode assembly are of opposite polarities.

### Method to Form Porous Current Collector Assemblies

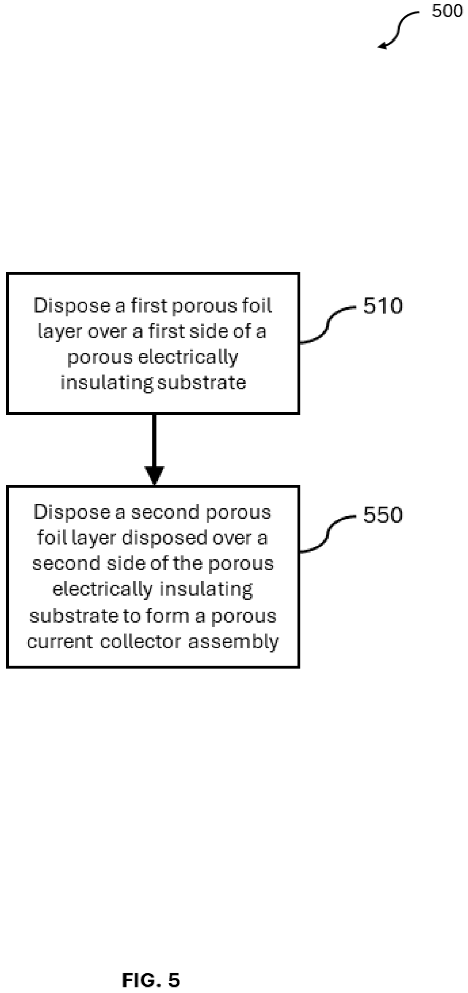

FIG. 5 is a flowchart showing a method 500 of forming a porous current collector assembly. As illustrated in FIG. 5, a first porous foil layer is disposed over a first side of a porous electrically insulating substrate in step 510. In step 520, a second porous foil layer is disposed over a second side of the porous electrically insulating substrate to form a porous current collector assembly.

In some embodiments, disposing the first porous foil layer over the first side of a porous electrically insulating substrate is performed prior to, after or concurrently to disposing the second porous foil layer over the second side of the porous electrically insulating substrate.

In some embodiments, the first and second porous foil layers are disposed on opposite sides of the porous electrically insulating substrate such that the first side is opposite the second side. In some embodiments, the method may further include disposing an additional porous foil layer over the first porous foil layer and/or the second porous foil layer. In some embodiments, disposing any one of the porous foil layers include at least partially covering the sides of the porous electrically insulating substrate. In some embodiments, disposing any one of the porous foil layers include completely covering the side of the porous electrically insulating substrate.

The method of forming the porous current collector assembly may be used to form an electrode. A method of forming an electrode includes forming a porous current collector assembly by disposing a first porous foil layer over a first side of a porous electrically insulating substrate and disposing a second porous foil layer disposed over a second side of the porous electrically insulating substrate, calendering a dry electrode film mixture in a dry process to form an electrode film, and disposing the electrode film over the porous current collector assembly to form an electrode.

An electrode assembly, an electrode assembly stack, a double electrode assembly stack and/or an energy storage device may be formed using the processes disclosed herein. In some embodiments, any one or more components may be disposed in various orders and configurations.

A method of forming an electrode assembly includes disposing an electrode film over a first side of a porous current collector assembly and disposing a second electrode film over a second side of the porous current collector assembly to form an electrode assembly.

A method of forming a double electrode assembly stack includes disposing a first anode electrode film over a first side of the first porous current collector assembly, disposing a first cathode electrode film over a second side of the first porous current collector assembly, disposing the first cathode electrode film over a first side of a second cathode electrode film, disposing the second cathode electrode film over a first side of a second porous current collector assembly opposite the first side of the second cathode electrode film, and disposing a second anode electrode film over a second side of the second porous current collector assembly to form a double electrode assembly stack.

A method of forming an electrode assembly stack with a separator includes disposing an electrode assembly over a first side of a separator and disposing a second electrode assembly over a second side of the separator to form the electrode assembly stack.

### Electrode Film Materials and Electrode Films

An electrode film mixture and electrode films formed using materials (e.g., cathode active materials, anode active materials) are described herein. In some embodiments, components of an active layer or electrode film may comprise particles, such as a composite material. The particles for forming the active layer or electrode film may be combined with a material to provide an electrode film mixture. In some embodiments, the active layer or electrode film may be formed from the electrode film mixture such that weight percentages of the components of the active layer or electrode film and weight percentages of the components of the electrode film mixture are substantially the same.

An active material (e.g., cathode active material, anode active material) may be used in the preparation of an electrode film and/or electrode for an energy storage device.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., LiFePO₄ or "LFP"), lithium manganese iron phosphate (e.g., LiMn_{0.6}Fe_{0.4}PO₄ or "LMFP"), lithium nickel manganese cobalt oxide (i.e., LiNiₓMn_{y}Co_{1-x-y}O₂ or "NMC"), lithium nickel cobalt aluminum oxide (i.e., LiNiₓCo_{y}Al_{z}O₂ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include LiFePO₄ (i.e., "lithium iron phosphate" and "LFP") and LiMn₁₋ₓFeₓPO₄ (i.e., "lithium manganese iron phosphate" and "LMFP") (e.g., LiMn_{0.6}Fe_{0.4}PO₄ or LiMn_{0.8}Fe_{0.2}PO₄). In some embodiments, the iron phosphate-based active material includes LFP. In some embodiments, the iron phosphate-based active material includes an LMFP. In some embodiments, the iron phosphate-based active material includes an LFP and/or an LMFP. In some embodiments, the cathode active material is a polycrystal, a single crystal, or combinations thereof.

In some embodiments, the active material is an anode active material. In some embodiments, anode active materials can include, for example, an insertion material (such as carbon, Lithium titanate ("LTO"), graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and their compounds as well as metal-C composite for anode.

In some embodiments, the electrode film mixture and/or the electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film mixture and/or an electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film mixture and/or an electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes. In some embodiments, the conductive additive is selected from a conductive carbon, a carbon nanotube, and combinations thereof. In some embodiments, the conductive carbon additive comprises carbon black, carbon nanotubes, such as single-walled carbon nanotubes (SWCNTs), a few-walled carbon nanotube (FWCNT) and multi-walled carbon nanotubes (MWCNTs). In some embodiments, the electrode film mixture and/or the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film mixture and/or the electrode film includes a binder or binder material. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, polyalkylenes, polyethers, styrene-butadiene, styrene-butadiene rubber (SBR), co-polymers of polysiloxanes and polysiloxane, branched polyethers, polyvinylethers, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film mixture and/or the electrode film includes, includes about, includes at most, or includes at most about, 0.2 wt.%, 0.4 wt.%, 0.6 wt.%, 0.8 wt.%, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the electrode film is substantially absent or absent of solvent residue. In some embodiments, the resulting active layer or electrode films are self-supporting films formed using the dry process from the dry particle mixture. In some embodiments, the resulting active layer or electrode films are freestanding films formed using the dry process from the dry particle mixture. A process for forming an active layer or electrode film can include fibrillizing the fibrillizable binder component(s) such that the film comprises fibrillized binder. In further embodiments, a freestanding active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, the binder is combined with the active material and calendered to form the electrode film. In some embodiments, the binder is combined with the active material and calendered without use of solvents to form the dry electrode film. In some embodiments, forming the electrode film includes calendering, pressing, and/or laminating the electrode film mixture.

In some embodiments, an electrode film is disposed on a current collector to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween.

### Energy Storage Devices

Energy storage devices including the porous current collector assembly disclosed herein are described. An energy storage device includes a positive electrode (i.e., cathode), a negative electrode (i.e., anode), a porous current collector assembly, and an electrolyte positioned within a housing. In some embodiments, the energy storage device includes a separator disposed between the anode and cathode. Each electrode includes an electrode film disposed over a current collector or a porous current collector assembly. In some embodiments, the electrode includes an electrode film disposed over a porous current collector assembly. In some embodiments, the electrode includes an electrode film disposed over a current collector. In some embodiments, the current collector is a foil. In some embodiments, the current collector is aluminum foil, a copper foil, or combinations thereof. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween. In some embodiments, an active layer is disposed on each side of the current collector or the porous current collector assembly.

In some embodiments, an electrode is a double-sided electrode. In some embodiments, the double-sided electrode includes two electrode films. In some embodiments, the double-sided electrode may include a current collector or a porous current collector assembly, a top electrode film, and a bottom electrode film. In some embodiments, each of the two electrode films can have any suitable shape, size and thickness.

In some embodiments, the energy storage device comprises a porous current collector assembly, an anode electrode, the cathode electrode, an electrolyte, and a housing, wherein the electrolyte, the porous current collector assembly, anode electrode and cathode electrode are disposed within the housing. In some embodiments, the energy storage device includes a separator positioned between the anode electrode and the cathode electrode. In some embodiments, an energy storage device is formed by placing an electrolyte, a porous current collector assembly, an anode electrode and the cathode electrode described herein within a housing.

An electrode assembly includes a cathode, an anode, and a porous current collector assembly. In some embodiments, the electrode assembly includes a separator positioned between the anode and the cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The electrode disclosed herein may be used for an energy storage device. In some embodiments, the energy storage device comprises a porous current collector assembly, an anode electrode, the cathode electrode, an electrolyte, and a housing, wherein the electrolyte, the porous current collector assembly, anode electrode and cathode electrode are disposed within the housing. In some embodiments, an energy storage device is formed by placing an electrolyte, a porous current collector assembly, an anode electrode and the cathode electrode described herein within a housing. In some embodiments, the energy storage device includes a separator positioned between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable electrolyte (e.g., lithium-containing electrolyte). For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF₆), lithium bis(trifluoromethanesulfonyl)imide (LiTFSI), lithium tetrafluoroborate (LiBF₄), lithium perchlorate (LiClO₄), lithium bis(trifluoromethansulfonyl)imide (LiN(SO₂CF₃)₂), lithium trifluoromethansulfonate (LiSO₃CF₃), lithium bis(oxalato)borate (LiB(C₂O₄)₂), lithium bis(fluorosulfonyl)imide (LiN(SO₂F)₂ ("LiFSI"), lithium difluoro(oxalato)borate (LiC₂BF₂O₄), lithium difluorophosphate (LiDFP), lithium bis(oxalate)borate (LiBOB), lithium difluoro(bisoxalato)phosphate (LiDFOP), and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween. In some embodiments, salts are utilized as additives in the electrolyte system, and can be used at individual or total concentration of, of about, of at most, or at most about, 0.1 wt.%, 0.2 wt.%, 0.3 wt.%, 0.4 wt.%, 0.5 wt.%, 0.6 wt.%, 0.7 wt.%, 0.8 wt.%, 0.9 wt.%, 1 wt.%, 1.1 wt.%, 1.2 wt.%, 1.3 wt.%, 1.4 wt.%, 1.5 wt.%, 1.6 wt.%, 1.7 wt.%, 1.8 wt.%, 1.9 wt.%, 2 wt.%, 2.1 wt.%, 2.2 wt.%, 2.3 wt.%, 2.4 wt.%, 2.5 wt.%, 2.6 wt.%, 2.7 wt.%, 2.8 wt.%, 2.9 wt.%, 3 wt.%, 4 wt.%, 5 wt.%, 6 wt.%, 7 wt.%, 8 wt.%, 9 wt.% or 10 wt.%, or any range of values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent or a liquid co-solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the liquid co-solvent can comprise an acetate. In some embodiments, the acetate is selected from methyl acetate (MA), ethyl acetate (EA), and combinations thereof. In some embodiments, the solvent can comprise a nitrile (e.g., acetonitrile ("AN")). In some embodiments, the solvent may include EC, PC, VEC, VC, FEC, DMC, DEC, EMC, MA, MP, EA, MB, DTD, PRS, acetonitrile, and combinations thereof. In some embodiments, the solvent may include EC, DMC, DEC, EMC, MA, and combinations thereof. In some embodiments, the solvent may include EC, DMC, EMC, MA, and combinations thereof. In some embodiments, the solvent may include a ratio of EC:DMC:EMC of 10-30:0-90:0-70.

In some embodiments, one or more solvents can be used at a concentration of, of about, of at least, or at least about, 15 wt.%, 20 wt.%, 30 wt.%, 35 wt.%, 40 wt.%, 45 wt.%, 50 wt.%, 55 wt.%, 60 wt.%, 65 wt.%, 70 wt.%, 75 wt.%, 80 wt.%, 85 wt.% or 90 wt.%, or any range of values therebetween. In some embodiments, solvents are utilized as additives in the electrolyte system, and can be used at a concentration of, of about, of at most, or at most about, 0.1 wt.%, 0.2 wt.%, 0.3 wt.%, 0.4 wt.%, 0.5 wt.%, 0.6 wt.%, 0.7 wt.%, 0.8 wt.%, 0.9 wt.%, 1 wt.%, 1.1 wt.%, 1.2 wt.%, 1.3 wt.%, 1.4 wt.%, 1.5 wt.%, 1.6 wt.%, 1.7 wt.%, 1.8 wt.%, 1.9 wt.%, 2 wt.%, 2.1 wt.%, 2.2 wt.%, 2.3 wt.%, 2.4 wt.%, 2.5 wt.%, 2.6 wt.%, 2.7 wt.%, 2.8 wt.%, 2.9 wt.%, 3 wt.%, 4 wt.%, 5 wt.%, 6 wt.%, 7 wt.%, 8 wt.%, 9 wt.% or 10 wt.%, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments, where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

While certain embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

## Claims

1. A porous current collector assembly for an energy storage device, comprising:
a porous electrically insulating substrate comprising a first side and a second side;
a first porous foil layer disposed over the first side of the porous electrically insulating substrate; and
a second porous foil layer disposed over the second side of the porous electrically insulating substrate.

2. The porous current collector assembly of Claim 1, wherein the first porous foil layer comprises a different metal from the second porous foil layer.

3. The porous current collector assembly of Claim 1 or 2, wherein the first porous foil layer and the second porous foil layer each independently comprise stainless steel or each independently comprise a metal selected from the group consisting of Cu, Al, Ni, Li, Mn, Co, Fe, Cr and combinations thereof.

4. The porous current collector assembly of Claims 1-3, wherein the first porous foil layer and the second porous foil layer each independently comprise a foil layer porosity of about 5-75%, a foil pore size of about 1 nm to about 1 cm and/or a foil layer thickness of about 0.1 µm to about 10 µm.

5. The porous current collector assembly of any of Claims 1-4, wherein the porous electrically insulating substrate comprises a polymer selected from the group consisting of polyethylene, polypropylene, polystyrene, polyvinyl chloride, polytetrafluoroethylene, polyurethanes, polyamide, polyimide, polyester, poly(vinylidene fluoride) aramid, polyethers, co-polymers thereof, and combinations thereof.

6. The porous current collector assembly of any of Claims 1-5, wherein the porous electrically insulating substrate comprises a substrate porosity of about 5% to about 75%, a substrate pore size of about 1 nm to about 1 cm, a substrate thickness of about 1 µm to about 30 µm and/or has a substrate melting temperature of about 50°C to about 450°C.

7. An electrode, comprising:
an electrode film; and
the porous current collector assembly of any of Claims 1-6, wherein the electrode film is disposed over the porous current collector assembly, optionally wherein the electrode film is substantially absent of solvent residue.

8. An electrode assembly, comprising:
the electrode of Claim 7; and
a second electrode film, wherein the porous current collector assembly is positioned between the electrode film and the second electrode film.

9. An electrode assembly stack, comprising:
the electrode assembly of Claim 8;
a second electrode assembly; and
a separator positioned between the electrode assembly and the second electrode assembly.

10. The electrode assembly stack of Claim 9, wherein the electrode film and the second electrode film are of the same polarity.

11. A double electrode assembly stack, comprising:
the electrode assembly of Claim 8; and
a second electrode assembly, wherein one of the electrode films of the second electrode assembly is in contact with one of the electrode film or the second electrode film of the electrode assembly.

12. The double electrode assembly stack of Claim 11, wherein the electrode film and the second electrode film are of opposite polarities.

13. An energy storage device, comprising:
the electrode assembly of Claim 8;
an electrolyte; and
a housing, wherein the electrode assembly and the electrolyte are disposed within the housing.

14. A method of forming a porous current collector assembly, comprising:
disposing a first porous foil layer over a first side of a porous electrically insulating substrate; and
disposing a second porous foil layer disposed over a second side of the porous electrically insulating substrate to form a porous current collector assembly, optionally wherein disposing the first porous foil layer comprises disposing the first porous foil layer over the first side opposite the second side of the porous electrically insulating substrate.

15. A method of forming an electrode, comprising:
forming the porous current collector assembly according to Claim 14;
calendering a dry electrode film mixture in a dry process to form an electrode film; and
disposing the electrode film over the porous current collector assembly to form an electrode.
